# EUROPEAN PATENT APPLICATION

(11) **EP 2 471 850 A2**
(43) Date of publication of application: **04.07.2012**
(21) Application number: 10812305.0
(22) Date of filing: 27.08.2010
(51) Int. Cl.: C08J 7/04, C08L 67/03, C08K 7/02, B60C 1/00

(54) **METHOD FOR MANUFACTURING A COMPOSITE MOLDED BODY**

(30) Priority: 28.08.2009 KR 20090080408
(71) Applicant: Petro. Co., Ltd, Seoul 121-120 (KR)
(72) Inventor: KIM, Wan Kil, Seoul 122-080 (KR)
(74) Representative: Mittler, Enrico
(86) International application number: PCT/KR2010/005767
(87) International publication number: WO 2011/025292

(57) **Abstract**

The present invention relates to a method for manufacturing a composite molded body, and more particularly, to a method for manufacturing a composite molded body, comprising: a step of manufacturing a molded body containing polyethylene terephthalate, acrylonitrile-butadiene-styrene, and glass or carbon fibers; and a step of coating the molded body with a reactive polyurethane composition or with a rubber composition. The composite molded body according to the present invention can be used in lieu of a wheel hub casting to minimize the weight of a wheel, can be manufactured at a low cost in terms of materials, and can be mass-produced. The composite molded body of the present invention has remarkably superior adhesion to the coating composition, and the strength and durability thereof corresponds to that of cast metal such as cast iron, stainless steel, aluminum, etc.

## Description

### Technical Field

The present invention relates to a method for manufacturing a composite molded body, and in particular to a method for manufacturing a composite molded body which comprises a step of manufacturing a molded body containing polyethyleneterephthalate, acrylonitrile-butadiene-styrene, and glass or carbon fibers; and a step of coating the molded body with a reactive coating composition, namely, a polyurethane composition or with a rubber composition.

### Background Art

The wheels helping easily move a certain thing might be classified into, depending on the purpose of its use, for example, the wheels which stand about 135kg of the maximum allowable weight and are applied to the movements of advanced home appliances, exhibit cases, office instruments, indoor decoration furniture, light things and industry purpose transporters, and the wheels for middle and low level loads which stand about 200kg of the maximum allowable weight and are generally applied to the movements of various weight things, and the wheels for high level loads which stand about 820kg of the maximum allowable loads and are generally applied to various articles for the purpose of industry, small size facilities, and transporters for light and heavy things,

The wheels are generally manufactured by coating a 2-liquid type polyurethane composition on a casting or using a strong plastic injection molding material manufactured using an injection-molding nylon. In the above, the plastic injection molding material is not made by a double injection with an adhesion, but is made in such a way that two materials are tangled by forming a groove or a certain stepped portion at a wheel hub.

The plastic injection material is limitative when coating a two-liquid polyurethane composition due to adhesion performance and durability and is easy to break.

The wheels manufactured using a metallic casting such as cast iron, stainless or aluminum in a conventional art generate a lot of noises, and the transportation cost needs a high cost due to the weight of casting (above 7.5 of viscosity), so the price of wheels is easily affected a lot, and the productivity is very low, and it is not easy to handle, and the manufacture of the same costs a lot.

### Disclosure of Invention

Accordingly, the present invention is made to overcome the problems of the conventional art and it is an object of the present invention to provide a composition of a molded body having a strength and durability corresponding to a metal casting, a composite molded body and its manufacturing method, of which the composite molded body is manufactured by coating a reactive polyurethane composition or a rubber composition on an outer surface of a molded body manufactured using the above composition, thus enhancing an adhesion performance with a reactive polyurethane composition or a rubber composition during the manufacture of a composite molded body.

It is another object of the present invention to provide a method for manufacturing a composite molded body which overcome the problems that a conventional method for manufacturing wheels with a metal casting needs a lot of costs with the aid of a process comprising a step of manufacturing a molded body containing polyethyleneterephthalate, acrylonitrile-butadiene-styrene, and glass or carbon fibers; and a step of coating the molded body with a reactive polyurethane composition or with a rubber composition.

To achieve the above objects, there is provided a method for manufacturing a composite molded body which comprises a step of manufacturing a molded body containing polyethyleneterephthalate, acrylonitrile-butadiene-styrene, and glass or carbon fibers; and a step of coating the molded body with a reactive polyurethane composition or with a rubber composition.

### Best modes for carrying out the invention

The present invention will be described in details.

The technical terms and science terms used throughout the specification can be defined as the terms that those skilled in the art conventionally understand unless otherwise stated, and the descriptions on the known functions and the construction which might make the subject matters unclear will be omitted.

The present invention is directed to a method for manufacturing a composite molded body.

The above method comprises a process comprising a step (a) of manufacturing a molded body containing polyethyleneterephthalate (PET), acrylonitrile-butadiene-styrene (ABS), and glass or carbon fibers (GF); and

a step (b) of coating the molded body with a reactive polyurethane composition or with a rubber composition.

The polyethyleneterephthalate (PET) used in the present invention is not limited as long as it is conventionally used in the same technical field as the present invention; however the present invention is directed to providing an economical composite molded body and its manufacturing method which can significantly reduce the problems in terms of an environment contamination by recycling a recyclable PET as the use of plastic products sharply increases depending on the development of a plastic industry, and the treatment of wastes becomes a big issue in recent years.

The present invention is directed to manufacturing a composite molded body enhancing an adhesion performance and having a strength and durability corresponding to those of a casting, the composite a molded body containing polyethyleneterephthalate, acrylonitrile-butadiene-styrene (ABS), and glass or carbon fibers.

It is preferred that the molded body of the step (a) is **characterized in that** 1∼30weight% of glass fiber (GF) or carbon fiber (CF) is contained with respect to the 100weight% of mixture containing mixed polyethyleneterephthalate and acrylonitrile-butadiene-styrene, and even when the glass fiber or the carbon glass is less than 1weight%, the strength and durability might be weakened, and when it exceeds 30weight%, a shock resistance might be weakened.

It is preferred that in the mixture containing mixed polyethyleneterephthalate and acrylonitrile-butadiene-styrene, polyethyleneterephthalate is contained by 30∼70weight%, and acrylonitrile-butadiene-styrene is contained by 30∼70weght%.

When the mixture containing mixed polyethyleneterephthalate and acrylonitrile-butadiene-styrene and the glass fiber or the carbon fiber is within the above range, it is possible to manufacture a molded body having excellent shock resistance, durability, heat resistance and adhesion.

The molded body of the step (a) can be manufactured by further containing one or at least two resins selected from the group consisting of polyethylene (PE), polycarbonate (PC), polybutyleneterephthalate (PBT), nylon, thermoplastic polyurethane (TPU), and styrene-butadiene-styrene (SBS).

It is preferred that 1∼30weight% of the glass fiber or the carbon fiber is contained with respect to 100weight% of the mixture containing one or at least two resins selected from the group consisting of polyethyleneterephthalate, acrylonitrile-butadiene-styrene, polyethylene, polycarbonate, polybutyleneterephthalate, nylon, thermoplastic polyurethane, and styrene-butadiene-styrene, and even when the glass fiber or the carbon glass is less than 1weight%, the strength and durability might be weakened, and when it exceeds 30weight%, a shock resistance might be weakened.

It is preferred that the mixture containing one or at least resins selected from the group consisting of polyethyleneterephthalate, acrylonitrile-butadiene-styrene, polyethylene, polycarbonate, polybutyleneterephthalate, nylon, thermoplastic polyurethane, and styrene-butadiene-styrene contains 30∼60weigh% of poiyethyleneterephthalate, 20∼60weight% of acrylonitrile-butadiene-styrene, and 1∼50weight% of one or at least two resins selected from the group consisting of polyethylene, polycarbonate, polybutyleneterephthalate, nylon, thermoplastic polyurethane, and styrene-butadiene-styrene, and when it is within the above range, it is possible to manufacture a molded body having excellent shock resistance, durability, heat resistance and adhesion.

When one or at least two resins selected from the group consisting of polyethylene, polycarbonate, polybutyleneterephthalate, nylon, thermoplastic polyurethane, and styrene-butadiene-styrene is contained in the molded body by less than 1weight%, no changes occur at the strength and durability, and when it exceeds 50weight%, adhesion is worsened, and the price increases, so an actual commercialization of products might be hard.

In the step (b), it is possible to manufacture a composite molded body by including a hardening step after coating a reactive polyurethane composition or a rubber composition on the molded body, and the strength and durability of the composite molded body might be enhanced during a hardening process.

It is preferred that the reactive polyurethane composition uses a 2-liquid type composition of a first solution containing polyol and a second solution containing isocyanate, and the reactive polyurethane composition has an excellent cohesion with the molded body of the present invention and is effective in terms of costs, thus promoting the commercialization of the composite molded body.

Besides the rubber composition is very effective in enhancing the strength and durability of the composite molded body. For example, nitrile butadiene rubber (NBR), styrene butadiene rubber (SBR), thermoplastic rubber (TPR), and silicon rubber, etc. might be used, but it is not limited thereto.

The composite molded body according to the present invention might be used as the casting of the wheel hub, and the weights of the wheels might be minimized, and the prices of materials are cheap, and the mass production is available, and the cohesion with the coating composition is excellent, and it is possible to manufacture the wheels having the strength and durability corresponding to the metal casting such as cast iron, stainless steel or aluminum.

### Advantageous effects

The composite molded body according to the present invention might be used as the casting of the wheel hub, and the weights of the wheels might be minimized with the aid of the construction containing polyethyleneterephtalate (PET), acrylonitrile-butadiene-styrene (ABS) and glass fiber or carbon fiber, and the prices of materials are cheap, and the mass production is available, and the cohesion with the coating composition is excellent, and it is possible to manufacture the wheels having the strength and durability corresponding to the metal casting such as cast iron, stainless steel or aluminum.

### Modes for carrying out the invention

The preferred embodiments of the present invention will be described in details for the purposes of understanding the constructions and effects of the present invention, not limiting the scopes of the present invention.

### [First experimental example] Wheel adhering test

A sample piece of the composite molded body according to the present invention was injected (Hosung Chemex), and urethane (TPU) was adhered using a common adhesive (Dongsung Chemical, 5100#), and the adhesion of the composite molded body was checked using a tensile strength meter depending on a peeling (adhesion force test). (○: no desquamation was checked, △: desquamation was likely to occur, X: desquamation was checked).

### [Second experimental test] Durability, running performance, heat-resisting property and shock resistance tests

Desquamation should not be checked out at a hub and a urethane -coated portion after four wheels grouped as one were driven 2km with 750k of weight being loaded, and a phenomenon that a bearing insertion portion was elongated should not be checked out as well. The durability and running state were checked in the above manner. (○: no desquamation and elongations were checked, △: desquamation and elongation seemed to happen a little, X: desquamation and elongation were checked). In terms of the heat-resisting property, the wheel states were checked every five minutes while adjusting the temperature at 90∼120°C in a dry oven (○: no deformation was checked, △ : deformation was likely to partially happen at above 110°C, X: deformation was checked). In addition, in terms of the shock resistance, four wheels were grouped as one set, and the wheels were dropped off at one meter height with 750kg being loaded, and the states of the wheels were checked. (○: no cracks were checked at hub, △ : cracks seemed to happen at hub, X: cracks were checked at hub).

### [Embodiments 1 - 12]

Recycling polyethyleneterephthalate (SK Chemical, 4080), acrylonitrile-butadiene-styrene (LG Chemical, Hi100) and glass fiber (Korea Fiber. Glass fiber chop) or carbon fiber were mixed for 30 minutes in the mixer. Depending on necessity, one or at least two resins selected from the group consisting of polyethylene (recycling), polycarbonate (LG Chemical, Calibre 201), polybutylenesterephthalate (LG Chemical, 5011), nylon (Kolon, Dupont), thermoplastic polyurethane (Hosung Chemex, 5190AP) and styrene-butadiene-styrene (Kumho Petrochemical, KT201), and the composition and contents of each composition were shown in Table 1. The above mixture was mixed at 1,400rpm using a 60m/m single extruder, the temperature of which was adjusted to 220∼250°C, and the mold temperature was adjusted to 220∼240°C using the injection molding machine (Yujin hydraulic, 20 ounce), and a certain amount of the mixture was injected into the mold, thus producing a molded body after cooling for 40 seconds. A composite molded body was manufactured through a process in which a 2-liquid type reactive polyurethane composition or rubber composition was coated on the molded body. The experiment results in terms of the adhesion, durability, running performance and shock resistances of the composite molded body according to each embodiment were shown in Table 2.

### [Comparison 1]

Recycling polyethyleneterephthalate (SK Chemical, 4080), polycarbonate (LG Chemical, PC201) and glass fiber (Korea Fiber, Glass fiber chop) were mixed in a mixer for 30 minutes. The composition and contents of each composition were shown in Table 1. The mixture was mixed at 1,400rpm using a 60m/m singe extruder, the temperature of which was adjusted to 220∼250°C, and the mold temperature was adjusted to 220∼240°C using the injection molding machine (Yujin hydraulic, 20 ounce), and a certain amount of the mixture was injected into the mold, thus producing a molded body after cooling for 40 seconds. A composite molded body was manufactured through a process in which a 2-liquid type reactive polyurethane composition was coated on the molded body and was hardened. The experiment results in terms of the adhesion, durability, running performance and shock resistances of the composite molded body according to the comparison 1 were shown in Table 2.

### [Comparison 2]

The comparison 2 was conducted in the same manner as the comparison 1 except that Recycling polyethyleneterephthalate (SK Chemical, 4080), polybutyleneterephthalate (LG Chemical 5011) and glass fiber (Korea fiber, glass fiber chop) were mixed in a mixer for 30 minutes. Each composition and contents were shown in Table 1, and the experiment results in terms of the adhesion, durability, running performance and shock resistances of the comparison 2 were shown in Table 2.

**[Table 1]**

| Compositions | Recycling PET | ABS | GF | CF | PE | PC | PBT | Nylon | TPU | SBS | Coating composition |
|---|---|---|---|---|---|---|---|---|---|---|---|
| Embodiment 1 | 6kg | 4kg | 1.5kg | - | - | - | - | - | - | - | Polyurethane |
| Embodiment 2 | 6 kg | 4 kg | - | 0.15kg | - | - | - | - | - | - | Polyurethane |
| Embodiment 3 | 6 kg | 3 kg | 1.5kg | - | 1 kg | | - | - | - | - | Polyurethane |
| Embodiment 4 | 5 kg | 3 kg | 1.5kg | - | - | 2kg | - | - | - | - | Polyurethane |
| Embodiment 5 | 5 kg | 3 kg | 1.5kg | - | - | - | 2kg | - | - | - | Polyurethane |
| Embodiment 6 | 5 kg | 3 kg | 1.5kg | - | - | - | - | 2kg | - | - | Polyurethane |
| Embodiment 7 | 5 kg | 3 kg | 1.5kg | - | - | - | - | - | 2kg | - | Polyurethane |
| Embodiment 8 | 6 kg | 3.7 kg | 1.5kg | - | - | - | - | - | - | 0.3kg | Polyurethane |
| Embodiment9 9 | 5 kg | 3 kg | 1.5kg | - | 1kg | - | - | - | - | 1kg | Polyurethane |
| Embodiment 10 | 5 kg | 3 kg | 1.5kg | - | - | 1.7kg | - | - | - | 0.3kg | Polyurethane |
| Embodiment 11 | 5 kg | 3 kg | 1.5kg | - | - | - | 1.7kg | - | - | 0.3kg | Polyurethane |
| Embodiment 12 | 6 kg | 4 kg | 1.5kg | - | - | - | - | - | - | - | Silicon rubber |
| Comparison 1 | 6 kg | - | 2kg | - | - | 4kg | - | - | - | - | Polyurethane |
| Comparison 2 | 6 kg | - | 2kg | - | - | - | 4kg | - | - | - | Polyurethane |

**[Table 2]**

| Physical property | adhesion | durability | Running performance | Heat resistance | Shock resistance |
|---|---|---|---|---|---|
| Embodiment 1 | ○ | Δ | ○ | Δ | ○ |
| Embodiment 2 | ○ | ○ | ○ | Δ | ○ |
| Embodiment 3 | ○ | ○ | ○ | Δ | ○ |
| Embodiment 4 | ○ | ○ | ○ | ○ | ○ |
| Embodiment 5 | ○ | ○ | ○ | ○ | ○ |
| Embodiment 6 | ○ | ○ | ○ | ○ | Δ |
| Embodiment 7 | ○ | ○ | ○ | Δ | ○ |
| Embodiment 8 | ○ | ○ | ○ | Δ | ○ |
| Embodiment 9 | ○ | ○ | ○ | Δ | ○ |
| Embodiment 10 | ○ | ○ | ○ | ○ | ○ |
| Embodiment 11 | ○ | ○ | ○ | ○ | ○ |
| Embodiment 12 | ○ | Δ | ○ | Δ | ○ |
| Comparison 1 | X | X | Δ | ○ | Δ |
| Comparison 2 | X | X | Δ | Δ | Δ |

As shown in the embodiments 1∼12, and the comparisons 1 and 2, the composite molded body manufactured according to the present invention has excellent durability, running performance, heat resistance and shock resistance which correspond to the casting, and has the physical properties better than the plastic injection material products.

As seen in the comparisons 1 and 2, it is confirmed that the physical properties of the composite molded body is maximized when polyethylene terephthalate, acrylonitrile-butadiene-styrene, and glass or carbon fibers are used together.

The composite molded body manufactured according to the present invention is 5 times lighter than the conventional metal casting product, so the transportation costs can be saved a lot, and the manufacture processes are significantly reduced, and the noises decrease during the transportation, and it is easy to handle, and the commercialization are possible for various products.

## Claims

1. A method for manufacturing a composite molded body, comprising:
a step (a) of manufacturing a molded body containing polyethyleneterephthalate, acrylonitrile-butadiene-styrene, and glass or carbon fibers; and
a step (b) of coating the molded body with a reactive polyurethane composition or with a rubber composition.

2. A method for manufacturing a composite molded body according to claim 1, wherein the polyethyleneterephthalate of step (a) is a recycling polyethyleneterephthalate.

3. A method for manufacturing a composite molded body according to claim 1, wherein the molded body of the step (a) contains one or at least two resins selected from the group consisting of polyethylene, polycarbonate, polybutyleneterephthalate, nylon, thermoplastic polyurethane, and styrene-butadiene-styrene .

4. A method for manufacturing a composite molded body according to claim 1, wherein the step (b) further comprises:
a sub-step of coating the molded body with a reactive polyurethane composition or a rubber composition and then of hardening the same.

5. A method for manufacturing a composite molded body according to claim 4, wherein said reactive polyurethane composition is a two-liquid type composition consisting of a first solution containing polyol, and a second solution containing isocyanate.

6. A method for manufacturing a composite molded body according to claim 1, wherein the molded body of said step (a) contains 1∼30weight% of glass fiver or carbon fiber with respect to 100weight% of the mixture containing polyethyleneterephthalate, and acrylonitrile-butadiene-styrene.
